# EUROPEAN PATENT APPLICATION

(11) **EP 3 678 005 A1**
(43) Date of publication of application: **08.07.2020**
(21) Application number: 18829715.4
(22) Date of filing: 30.05.2018
(51) Int. Cl.: G06F 3/044

(54) **TOUCH-CONTROL DISPLAY PANEL**

(30) Priority: 29.08.2017 CN 201710753214
(71) Applicant: BOE Technology Group Co., Ltd., Beijing 100015 (CN); Ordos Yuansheng Optoelectronics Co., Ltd., Ordos, Inner Mongolia 017020 (CN)
(72) Inventor: ZHAO, Yanyan, Beijing 100176 (CN); XU, Jingyi, Beijing 100176 (CN); TANG, Fuqiang, Beijing 100176 (CN); FANG, Yezhou, Beijing 100176 (CN); WANG, Yuelin, Beijing 100176 (CN); YU, Yanan, Beijing 100176 (CN); ZHANG, Xu, Beijing 100176 (CN)
(74) Representative: Fritzsche, Thomas
(86) International application number: PCT/CN2018/088926
(87) International publication number: WO 2019/041920

(57) **Abstract**

The present disclosure provides a touch display panel. Specifically, the touch display panel includes a display area and a non-display area located in a periphery of the display area. In addition, the touch display panel further includes a touch circuit and a peripheral circuit, the peripheral circuit is located in the non-display area; and a conductive pattern. The conductive pattern is adapted to cooperate with at least a portion of the peripheral circuit to form a capacitance, and is further electrically insulated from the touch circuit and the peripheral circuit.

## Description

### RELATED APPLICATION(S)

The present application claims the benefit of Chinese Patent Application No. 201710753214.X, filed on August 29, 2017, the entire disclosure of which is incorporated herein by reference.

### TECHNICAL FIELD

The present disclosure relates to the field of touch technology, and in particular, relates to a touch display panel.

### BACKGROUND

With the development of touch technology, more and more products are beginning to adopt touch technology. At present, the most popular touch technology is capacitive touch sensing technology, wherein the capacitive touch technology comprises self-capacitance technology and mutual-capacitance technology. According to the mutual-capacitive touch technology, an ITO conductive layer is coated on a surface of glass. In such a case, when the surface of glass is touched by human hands, the surface capacitance of the panel will change. According to the self-capacitance touch technology, signals are transmitted from internal circuits of the panel and simultaneously signals coming back are received. In this case, when the panel is touched by human hands, capacitance of the panel itself changes and can be sensed.

Furthermore, more and more electronic devices are beginning to integrate touch and display functions, that is, forming touch and display driver integration (TDDI) products. However, for TDDI products, the peripheral capacitance is high and the surface capacitance is poor in uniformity. As a result, in the process of checking the capacitance value, it is easy to cause such a problem that the capacitance value is difficult to control, resulting in loss of yield and potentially even touch failure.

### SUMMARY

According to an embodiment of the present disclosure, a touch display panel is provided. Specifically, the touch display panel includes a display area and a non-display area located in a periphery of the display area. In addition, the touch display panel further includes: a touch circuit and a peripheral circuit, the peripheral circuit is located in the non-display area; and a conductive pattern. The conductive pattern is adapted to cooperate with at least a portion of the peripheral circuit to form a capacitance, and is further electrically insulated from the touch circuit and the peripheral circuit.

According to a specific implementation, in the touch display panel provided by an embodiment of the present disclosure, an orthographic projection of the conductive pattern on the touch display panel coincides with an orthographic projection of at least a portion of the peripheral circuit on the touch display panel.

According to a specific implementation, in the touch display panel provided by an embodiment of the present disclosure, the peripheral circuit includes a driving circuit, wherein the driving circuit is disposed at two opposite sides of the touch circuit, and an orthographic projection of the driving circuit on the touch display panel falls within the orthographic projection of the conductive pattern on the touch display panel.

According to a specific implementation, in the touch display panel provided by an embodiment of the present disclosure, the driving circuit includes a gate driver on array (GOA) circuit.

According to a specific implementation, in the touch display panel provided by an embodiment of the present disclosure, the conductive pattern includes a strip-shaped conductive pattern, wherein an orthographic projection of the strip-shaped conductive pattern on the touch display panel is located in a periphery of an orthographic projection of the touch circuit on the touch display panel.

According to a specific implementation, in the touch display panel provided by an embodiment of the present disclosure, a width of the strip-shaped conductive pattern is in a range of 600 µm - 700 µm.

According to a specific implementation, in the touch display panel provided by an embodiment of the present disclosure, the orthographic projection of the conductive pattern on the touch display panel is located in the periphery of the orthographic projection of the touch circuit on the touch display panel, and is further spaced apart from the orthographic projection of the touch circuit on the touch display panel.

According to a specific implementation, in the touch display panel provided by an embodiment of the present disclosure, a distance between the orthographic projection of the touch circuit on the touch display panel and the orthographic projection of the conductive pattern on the touch display panel is not less than 1 µm.

According to a specific implementation, in the touch display panel provided by an embodiment of the present disclosure, the conductive pattern is grounded.

According to a specific implementation, in the touch display panel provided by an embodiment of the present disclosure, the conductive pattern is made of indium tin oxide (ITO) or metal.

According to a specific implementation, in the touch display panel provided by an embodiment of the present disclosure, a distance between the conductive pattern and the peripheral circuit is in a range of 100 µm - 300 µm along a direction perpendicular to the touch display panel.

Additional aspects and advantages of the present disclosure will be set forth or become apparent in part in the following description, or be realized in practicing the present disclosure.

### BRIEF DESCRIPTION OF THE DRAWINGS

The above and/or additional aspects and advantages of the present disclosure will become apparent and readily understood from the description of embodiments with reference to the drawings, in which:
Fig. 1 is a schematic diagram showing an induced capacitance inside a touch circuit for a touch display panel according to a related art;
Fig. 2 is a schematic diagram showing an induced capacitance generated by a touch circuit for a touch display panel due to influences of a peripheral circuit according to a related art;
Fig. 3 schematically shows an equivalent circuit diagram of various induced capacitances for the touch display panel in Fig. 2.
Fig. 4 is a schematic plan view showing a structure of a touch display panel according to an embodiment of the present disclosure, wherein a peripheral circuit is covered by a conductive pattern;
Fig. 5 is a schematic view showing an induced capacitance of a touch display panel according to an embodiment of the present disclosure; and
Fig. 6 schematically shows an equivalent circuit diagram of various induced capacitances for the touch display panel in Fig. 5.

### DETAILED DESCRIPTION OF THE EMBODIMENTS

Embodiments of the present disclosure will be described in detail below. It is to be noted that the embodiments are shown by way of example only, and the same or similar reference signs are used to refer to the same or similar elements, or elements having the same or similar functions. It is also to be noted that the embodiments described below are exemplary. The embodiments are used to explain the present disclosure only, and should not be construed as limiting the present disclosure.

In the drawings and the related description, the following reference signs are used to refer to the relevant components: 100 touch display panel; 1 pixel area; 2 peripheral circuit; 3 conductive pattern; 4 data line; 5 touch line; 6 common electrode line; and 7 gate line.

In a touch display panel, a peripheral circuit is typically provided in a periphery of a touch circuit (generally in a pixel area), and a capacitance is generated between the peripheral circuit and the touch circuit. Therefore, during use, the peripheral capacitance value of the touch circuit tends to increase, which makes it difficult to control the peripheral capacitance of the touch circuit, resulting in loss of yield and potentially even touch failure. To this end, embodiments of the present disclosure provide a touch display panel.

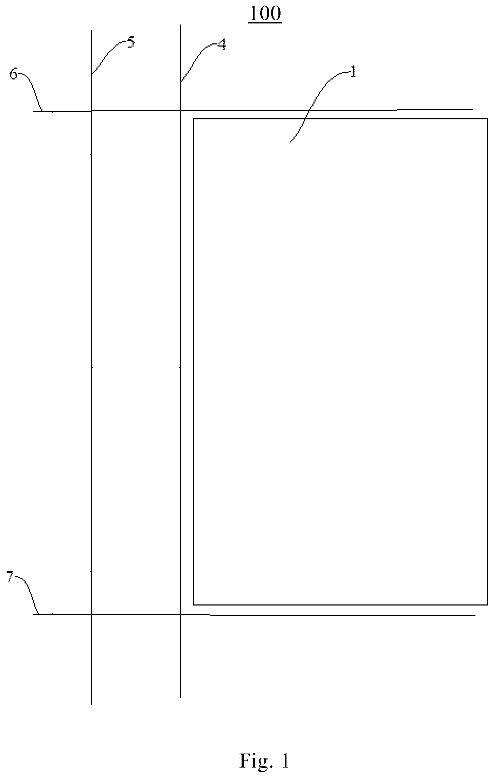

The touch display panel 100 according to an embodiment of the present disclosure is described in detail below with reference to Figs 1-6. As an example, the touch display panel 100 can be used for mobile terminals such as mobile phones, tablet computers, etc., but the present disclosure is by no means limited thereto.

Generally, the touch display panel includes a display area and a non-display area, wherein the display area is generally located at a center of the entire panel, and the non-display area is a peripheral area surrounding the display area. Further, as shown in Fig. 1, the touch display panel 100 can also be provided with a touch circuit and a peripheral circuit 2, and the peripheral circuit 2 is disposed, for example, in a peripheral area of the touch display panel 100, that is, in a non-display area. Specifically, in the touch display panel 100 shown by Fig. 1, the touch circuit may include a touch line 5. In addition, in Fig. 1, a data line 4, a common electrode line 6, and a gate line 7 for display purpose are also illustrated in the touch display panel 100, wherein the data line 4 and the gate line 7 intersect each other to define a pixel area 1. Generally, the touch circuit can receive a touch signal from outside. Further, the peripheral circuit 2 is disposed in the non-display area, for example, in the periphery of the pixel area 1 or the touch circuit in Fig. 1. In such a touch display panel 100, induction capacitances C1, C2, and C3 are generated. Specifically, the induced capacitance C1 is generated between the data line 4 and the touch line 5, the induced capacitance C2 is generated between the touch line 5 and the common electrode line 6, and the induced capacitance C3 is generated between the touch line 5 and the gate line 7. It will be apparent to those skilled in the art that the three capacitances C1, C2, and C3 are in parallel and are giving together a total capacitance inside the touch display panel 100, C_{inside} = C1 + C2 + C3.

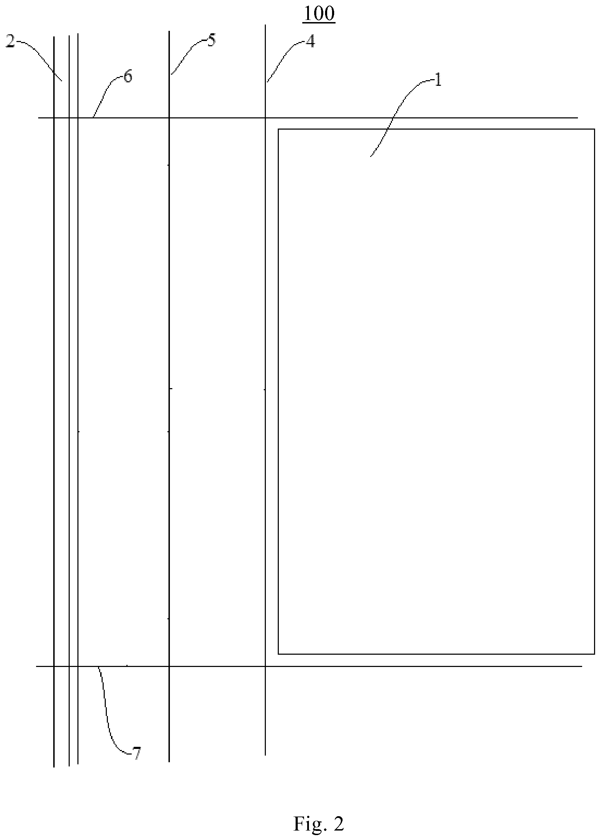

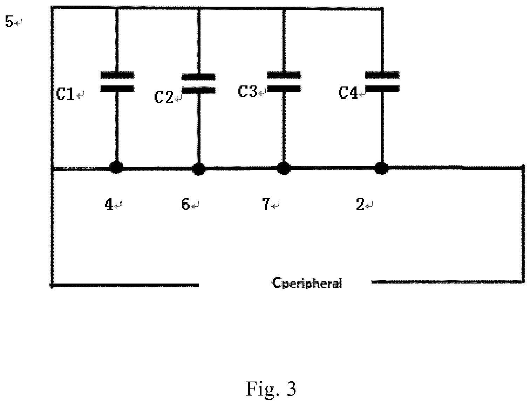

Referring to Fig. 2, a schematic diagram of an induced capacitance generated by a touch circuit for a touch display panel due to influences of a peripheral circuit according to a related art is schematically illustrated. Specifically, in addition to the components as described above in connection with Fig. 1 (such as pixel area 1, data line 4, touch line 5, common electrode line 6, gate line 7, capacitance C1, capacitance C2, and capacitance C3), the peripheral circuit 2 is further included in the touch display panel 100 shown by Fig. 2. In such a case, the peripheral capacitance value of the touch circuit will change due to influences of the peripheral circuit 2. Specifically, a capacitance C4 can be generated between the touch circuit as a whole and the peripheral circuit 2. It will be apparent to those skilled in the art that the capacitance C4 is in parallel with the three capacitances C1, C2 and C3 as described previously in connection with Fig. 1. For the touch display panel 100 shown in Fig. 2, an equivalent circuit diagram of the various induced capacitances generated therein is schematically shown in Fig. 3. Therefore, for the touch display panel 100 shown in Fig. 2, the peripheral capacitance of the touch circuit Cₚₑᵣᵢₚₕₑᵣₐₗ = C1+C2+C3+C4. That is, in the touch display panel 100 shown by Fig. 2, the peripheral capacitance Cₚₑᵣᵢₚₕₑᵣₐₗ of the touch circuit will be larger than the inside capacitance C_{inside} of the touch circuit. In addition, in consideration of the gradual downsizing of touch display panel 100, the distance between the touch circuit and the peripheral circuit 2 will be further reduced, thereby causing the capacitance C4 to increase as well.

In view of above, in an embodiment of the present disclosure, a touch display panel is provided, in order to eliminate or at least alleviate disadvantages of the touch display panel as described above in connection with the related art.

Specifically, the touch display panel 100 may include the conductive pattern 3. Further, the conductive pattern 3 may be adapted to cooperate with at least a portion of the peripheral circuit 2 to form a capacitance. In addition, the conductive pattern 3 can also be electrically insulated from the touch circuit and the peripheral circuit 2. In other words, the conductive pattern 3 can form a capacitance with the peripheral circuit 2, and is not electrically connected to the touch circuit and the peripheral circuit 2 in the vicinity of the pixel area 1.

According to the touch display panel 100 provided by an embodiment of the present disclosure, the conductive pattern 3 is further disposed on the touch display panel 100, and the conductive pattern 3 is adapted to cooperate with the peripheral circuit 2 to form a capacitance. In addition, the conductive pattern 3 is also electrically insulated from the touch circuit and the peripheral circuit 2. In this way, the peripheral capacitance of the touch circuit can be reduced, thereby reducing influences of the peripheral circuit 2 in a periphery of the pixel area on the peripheral capacitance value of the pixel area 1.

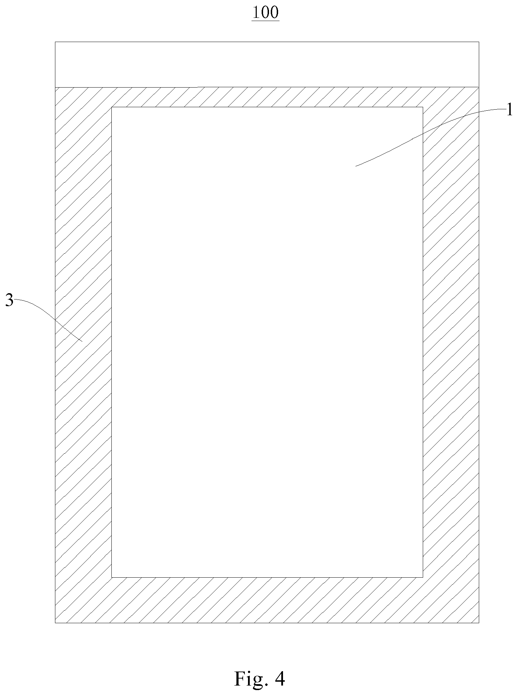

Next, with reference to Figs. 4-6, explanations will be provided in more detail about how to use the touch display panel provided by an embodiment of the present disclosure, so as to reduce the peripheral capacitance of the touch circuit.

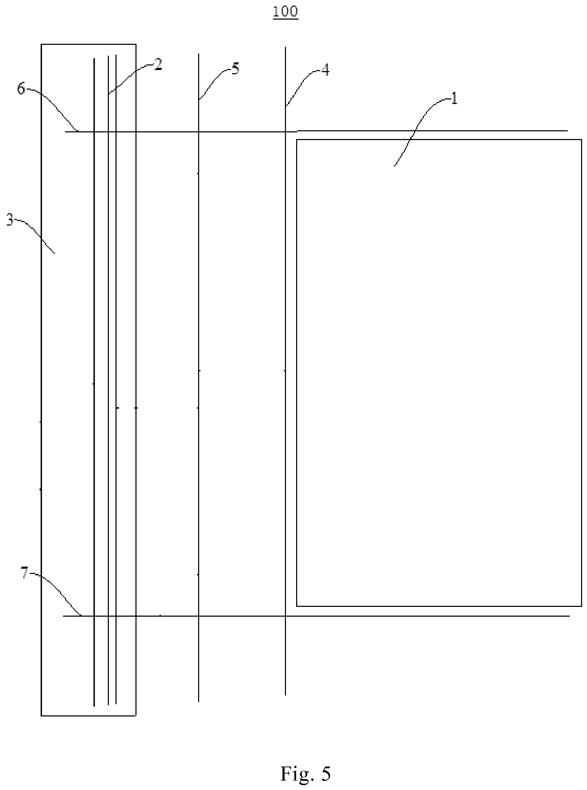

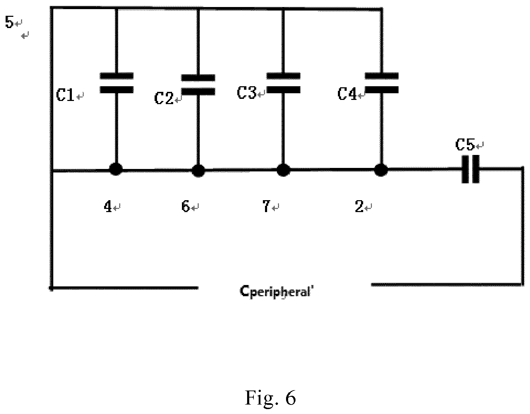

According to an embodiment of the present disclosure, as shown in Fig. 4, the conductive pattern 3 is provided, wherein the conductive pattern 3 is located in the periphery of the pixel area 1 and is configured to at least partially cover the peripheral circuit. Further, in connection with Fig. 5 and Fig. 6 showing an equivalent circuit diagram, a capacitance C5 is generated between the conductive pattern 3 and the peripheral circuit 2, and the capacitance C5 is in series with other capacitances (for example, capacitances C1, C2, C3, and C4). Therefore, by providing the conductive pattern 3 and thereby introducing the capacitance C5, the peripheral capacitance of the touch circuit will change. Specifically, the changed peripheral capacitance Cₚₑᵣᵢₚₕₑᵣₐₗ' can calculated as follows: 1/Cₚₑᵣᵢₚₕₑᵣₐₗ' =1/(C1+C2+C3+C4)+1/C5. Thus, after the conductive pattern 3 is provided, the peripheral capacitance of the touch circuit Cₚₑᵣᵢₚₕₑᵣₐₗ'= (C1+C2+C3+C4)×C5/(C1+C2+C3+C4+C5). It can be seen that by providing the conductive pattern 3, the peripheral capacitance value of the touch circuit will be reduced, thereby helping to improve the touch effect of the touch circuit.

In view of above, the conductive pattern 3 can form a capacitance with the peripheral circuit 2, thereby reducing the peripheral capacitance value of the touch circuit, and reducing influences of the peripheral circuit of the pixel area 1 on the peripheral capacitance value of the pixel area 1.

Here, it should be noted that although only one pixel area 1 is shown above in for example Figs. 4-5, those skilled in the art will appreciate that in an embodiment of the present disclosure, the touch display panel may include a plurality of arrays of pixels or pixel areas, constituting together the display area of the entire touch display panel, wherein the non-display area is located in the periphery of such a display area, and the peripheral circuit is disposed in such a non-display area.

In addition, the conductive pattern 3 of the present disclosure may be connected to a point of Ag (for example, to be grounded). In this way, static electricity generated inside the touch display panel 100 can be transmitted to the point of Ag through the conductive pattern 3 and conducted out of the touch display panel 100. Thus, the electro-static discharge (ESD) can be realized by the conductive pattern 3, thereby increasing the ESD passing rate, so that the static electricity inside the touch display panel 100 is quickly discharged.

Optionally, in an embodiment of the present disclosure, the conductive pattern 3 may be made of metal. For example, it can be made of copper-plating, gold-plating, etc. Similarly, in order to improve the display effect of the touch display panel 100, a transparent indium tin oxide (ITO) material may be used. Further optionally, back-plating ITO (B-ITO) may also be used.

In addition, in order to form a relatively stable capacitance in the periphery of the touch circuit and to avoid influences of the conductive pattern 3 on the touch circuit or other circuits, in embodiments of the present disclosure, the shape, size, and location of the conductive pattern 3 is designed optimally.

For example, in an embodiment of the present disclosure, the orthographic projection of at least a portion of the peripheral circuit 2 on the entire touch display panel coincides with the orthographic projection of the conductive pattern 3 on the entire touch display panel. That is, when projecting in a direction perpendicular to the touch display panel 100, a projection of a portion of the peripheral circuit 2 may coincide with the conductive pattern 3. Alternatively, the orthographic projection of the entire peripheral circuit 2 on the touch display panel coincides with the orthographic projection of the conductive pattern 3 on the touch display panel. Therefore, a stable capacitance can be generated between the peripheral circuit of the pixel area 1 and the conductive pattern 3, thereby reducing the peripheral capacitance value of the pixel area 1.

In order to avoid a capacitance being generated between the conductive pattern 3 and other circuits, the coverage of conductive pattern 3 may be set to be no larger than the coverage of peripheral circuit 2. That is, the coverage of conductive pattern 3 is less than or equal to the coverage of peripheral circuit 2, thereby improving the stability of the touch display panel 100.

In other words, when projecting in a direction perpendicular to the touch display panel, the conductive pattern 3 will fall within the coverage of peripheral circuit 2.

Optionally, the conductive pattern 3 may be strip-shaped. For example, a width thereof may be in the range of 600 µm -700 µm. In this way, the value of capacitance between the conductive pattern 3 and the peripheral circuit 2 can be limited, and the touch display panel 100 can be further improved in stability.

In some embodiments, when projecting in a direction perpendicular to the touch display panel 100, projections of the conductive pattern 3 and the touch circuit may be spaced apart, and the conductive pattern 3 may be located in the periphery of the touch circuit. Therefore, a capacitance will not be generated between the conductive pattern 3 and the pixel area 1, thereby reducing influences on the overall circuit due to the provision of conductive pattern 3.

Optionally, when projecting in a direction perpendicular to the touch display panel 100, the distance between the conductive pattern 3 and the touch circuit is not less than 1 µm. Thereby, influences on the stability of overall circuit due to the provision of conductive pattern 3 can be further reduced.

Optionally, the distance between the conductive pattern 3 and the peripheral circuit 2 may be in the range of 100 µm - 300 µm in a direction perpendicular to the touch display panel 100. In this way, the capacitance value between the conductive pattern 3 and the peripheral circuit can be limited, thereby reducing the peripheral capacitance value of the touch circuit further.

As shown in Fig. 4, when projecting in a direction perpendicular to the touch display panel 100, projections of both the conductive pattern 3 and the peripheral circuit 2 can be annuluses surrounding the touch circuit.

In addition, the peripheral circuit 2 may include a drive circuit. During the use of touch display panel, the capacitance value generated between the driving circuit and the touch circuit is generally large. Therefore, by providing the conductive pattern, a capacitance can be generated mainly between the conductive pattern and the driving circuit, thereby eliminating influences of the capacitance generated between the driving circuit and the touch circuit on the touch display panel. Specifically, in the present application, the driving circuit is disposed at two opposite sides of the touch circuit. In this way, it can be avoided that too much of the driving circuit is disposed at one side of the touch circuit, thereby improving the stability of the touch display panel and the shape uniformity of the touch display panel (i.e., avoiding one side being too wide and the other side being too narrow). Of course, the driving circuit can also be disposed at one side of the touch circuit.

In order to get a balanced capacitance, a conductive pattern can be provided in connection with the driving circuit. That is, an orthographic projection of at least a portion of the driving circuit on the touch display panel coincides with the orthographic projection of the conductive pattern on the touch display panel. In this way, influences of the driving circuit on the peripheral capacitance of the touch circuit can be well counteracted.

As an example, the driving circuit can be generally disposed at one side or both sides of the touch circuit. Therefore, the conductive pattern can also be provided in a strip shape corresponding to the driving circuit.

According to some embodiments of the present disclosure, the conductive pattern 3 may be grounded, thereby providing a discharge path. In this way, electro-static discharge can be achieved by grounding the conductive pattern 3, and the ESD passing rate can be improved. Then, static electricity inside the touch display panel 100 can be discharged quickly and the antistatic capability can be improved.

Additionally, the drive circuit of the present disclosure may be a GOA circuit. In this way, the touch circuit can be easily driven, the stability of the touch display panel can be improved, and the response efficiency of the touch display panel can be improved.

According to embodiments of the present disclosure, other configurations and operations for the touch display panel 100 are known to those of ordinary skill in the art and will not be described in detail herein.

In the description of the present specification, descriptions with reference to terms of "an embodiment", "some embodiments", "illustrative embodiment", "example", "specific example", or "some examples", etc. means particular features, structures, materials or characteristics described in the embodiments or examples are included in at least one embodiment or example of the present disclosure. In the present specification, the schematic representation of the above terms does not necessarily refer to the same embodiment(s) or example(s). Furthermore, the particular features, structures, materials, or characteristics as described may be combined in a suitable manner in any one or more embodiments or examples.

Although embodiments of the present disclosure have been shown and described above, it will be understood by those skilled in the art that various variations, modifications and substitutions can be made to these embodiments without departing from the principle and concept of the present disclosure. The scope of the present disclosure is defined by the claims and their equivalents.

## Claims

1. A touch display panel, comprising a display area and a non-display area in a periphery of the display area, wherein the touch display panel further comprises:
a touch circuit and a peripheral circuit, the peripheral circuit being located in the non-display area; and
a conductive pattern, wherein
the conductive pattern is adapted to cooperate with at least a portion of the peripheral circuit to form a capacitance, and is further electrically insulated from the touch circuit and the peripheral circuit.

2. The touch display panel according to claim 1, wherein
an orthographic projection of the conductive pattern on the touch display panel coincides with an orthographic projection of at least a portion of the peripheral circuit on the touch display panel.

3. The touch display panel according to claim 2, wherein
the peripheral circuit comprises a driving circuit, wherein the driving circuit is located at two opposite sides of the touch circuit, and an orthographic projection of the driving circuit on the touch display panel falls within an orthographic projection of the conductive pattern on the touch display panel.

4. The touch display panel according to claim 3, wherein
the driving circuit comprises a gate driver on array (GOA) circuit.

5. The touch display panel according to any one of claims 1-4, wherein
the conductive pattern comprises a strip-shaped conductive pattern, and an orthographic projection of the strip-shaped conductive pattern on the touch display panel is located in a periphery of an orthographic projection of the touch circuit on the touch display panel.

6. The touch display panel according to claim 5, wherein
a width of the strip-shaped conductive pattern is in a range of 600 µm - 700 µm.

7. The touch display panel according to claim 1, wherein
an orthographic projection of the conductive pattern on the touch display panel is located in an periphery of an orthographic projection of the touch circuit on the touch display panel and is further spaced apart from an orthographic projection of the touch circuit on the touch display panel.

8. The touch display panel according to claim 7, wherein
a distance between an orthographic projection of the touch circuit on the touch display panel and an orthographic projection of the conductive pattern on the touch display panel is not less than 1 µm.

9. The touch display panel of claim 1, wherein
the conductive pattern is grounded.

10. The touch display panel according to claim 1, wherein
the conductive pattern is made of indium tin oxide (ITO) or metal.

11. The touch display panel according to claim 1, wherein
a distance between the conductive pattern and the peripheral circuit is in a range of 100 µm - 300 µm along a direction perpendicular to the touch display panel.
